# EUROPEAN PATENT SPECIFICATION

(11) **EP 1 296 049 B1**
(45) Date of publication and mention of the grant of the patent: **15.10.2008**
(21) Application number: 01936873.7
(22) Date of filing: 06.06.2001
(51) Int. Cl.: F02D 33/00

(54) **BYPASS INTAKE AMOUNT CONTROLLER**
REGELUNG DER BYPASS-LUFTMENGE
CONTROLEUR DE L'ADMISSION PAR DERIVATION

(30) Priority: 19.06.2000 JP 2000187515; 19.06.2000 JP 2000187516
(43) Date of publication of application: 26.03.2003
(73) Proprietor: Keihin Corporation, Shinjuku-ku, Tokyo (JP)
(72) Inventor: NAMARI, Takashi Kakuda Dev. Ctr. Keihin Corp., Kakuda-shi Miyagi 981-1505 (JP); AKIYAMA, Hiroshige Kakuda Dev. Ctr. Keihin Corp., Kakuda-shi Miyagi 981-1505 (JP)
(74) Representative: Prechtel, Jörg
(86) International application number: PCT/JP2001/004778
(87) International publication number: WO 2001/098644

(56) References cited:
- JP-A- 2 037 169
- JP-A- 11 270 391
- JP-A- 11 280 526
- JP-A- 59 034 444
- JP-U- 1 152 041
- US-A- 4 381 747

## Description

### FIELD OF THE INVENTION

The present invention relates to a bypass intake control system that is used for controlling the idling rotational rate of an engine. The present invention relates in particular to an improvement in a system having an arrangement in which an intake passage of a throttle body is connected to a bypass that bypasses a throttle valve for opening and closing the intake passage, the bypass has a bypass valve for opening and closing the bypass, and the bypass valve is connected to a stepping motor whose operation opens and closes the bypass valve via a screw mechanism.

### BACKGROUND ART

A bypass intake control system of this type is already known in, for example, Japanese Patent Application Laid-open No. 59-34444. and US 4 381 747.

In conventional bypass intake control systems, as disclosed in the above-mentioned publication, a screw mechanism is made by forming a thread on the outer periphery of a valve piston, which is linked to an output shaft of a stepping motor in a relatively non-rotatable and axially movable manner, so as to form a male screw and forming a female screw, which the male screw engages with, in a valve housing. Since the bypass outlet port is opened and closed by the tip of the valve piston, a section of the male screw is present inside the bypass. This section of the male screw is therefore exposed to backfire gas when the engine backfires, and contaminants such as carbon thereby become attached to the male screw and are taken into a gap between the male screw and the female screw thus causing the possibility of a malfunction of the screw mechanism. Furthermore, since the valve piston and the outlet port are arranged on the same axis, a high engine negative boost pressure is applied to the leading end surface of the valve piston from the outlet port. Since the thrust force that is generated by this negative pressure and applied to the valve piston imposes a high load on the stepping motor, the stator motor is required to have a large capacity and it is thus difficult to reduce the size of the motor.

### DISCLOSURE OF THE INVENTION

The present invention has been carried out in view of the above-mentioned circumstances, and it is an object of the present invention to provide a bypass intake control system whose screw mechanism can be arranged so as not to be exposed to backfire gas and whose stepping motor can be reduced in size by preventing the engine negative boost pressure from imposing a high load on the stepping motor.

In order to achieve the above-mentioned object, in accordance with a first characteristic of the present invention, there is proposed a bypass intake control system comprising an intake passage of a throttle body which is connected to a bypass that bypasses a throttle valve for opening and closing the intake passage, a bypass valve which is provided in the bypass for opening and closing the bypass, and a stepping motor which is connected to the bypass valve and operates the bypass valve to open and close the bypass valve via a screw mechanism, characterized in that the bypass valve is formed from a valve housing having a valve hole, an inlet port opening on one side of the valve hole and leading to the upstream side of the bypass and an outlet port opening on the other side of the valve hole and leading to the downstream side of the bypass and a valve piston fitted in the valve hole in a slidable and non-rotatable manner so as to open and close communication between the inlet port and the outlet port, a screw hole is formed in the valve piston or an intermediate member connected to the valve piston on the side opposite to the bypass relative to sliding surfaces of the valve housing and the valve piston, and a threaded shaft section of an output shaft projecting out of an end surface of a rotor of the stepping motor is screwed into the screw hole so as to form the screw mechanism.

In accordance with the above-mentioned first characteristic, since the screw mechanism is provided on the side opposite to the bypass relative to the sliding surfaces of the valve piston and the valve hole, the sliding surfaces of the valve piston and the valve hole prevent the screw mechanism from being exposed to gas generated when the engine backfires, and it is thus possible to prevent contaminants such as carbon from becoming attached to the screw mechanism and always ensure smooth operation of the screw mechanism. Furthermore, since the screw mechanism is formed from the threaded shaft section of the output shaft projecting out of the rotor end surface and the screw hole provided in the valve piston and is placed outside the stepping motor, the size of the stepping motor can be reduced.

Furthermore, in accordance with a second characteristic of the present invention, in addition to the above-mentioned first characteristic, there is proposed a bypass intake control system wherein the outlet port opens onto an inside surface of the valve hole and is opened and closed by an outer peripheral surface of the valve piston.

In accordance with the above-mentioned second characteristic, since the outer periphery of the valve piston is used to open and close the outlet port, the valve piston is pressed against the inside of the valve hole around the outlet port by the engine negative boost pressure working on the outlet port, thus effectively suppressing air leakage through the edge of the outlet port of the valve hole, and thereby enhancing the precision with which the amount of air can be controlled by the valve piston. Moreover, since the valve hole is located on the upstream side relative to the outlet port that is narrowed down by the valve piston, the negative boost pressure applied to the valve hole is comparatively low, and the thrust (resistance) applied to the valve piston by the negative boost pressure is therefore also comparatively small. The valve piston can thus be moved up and down by a comparatively small output torque from the stepping motor. This, together with the effect obtained by arranging the threaded shaft section of the output shaft outside the stator, makes it possible to greatly reduce the size of the motor.

Furthermore, in accordance with a third characteristic of the present invention, in addition to the first or second characteristic, there is proposed a bypass intake control system wherein a diaphragm is provided between the valve housing and the valve piston to block communication between the valve hole and the stepping motor.

In accordance with the third characteristic, even if gas or moisture generated when the engine backfires passes the sliding surfaces of the valve piston and the valve hole, the diaphragm can reliably prevent the gas or moisture from entering the stepping motor, and thus the durability of the stepping motor can be enhanced.

Furthermore, in accordance with a fourth characteristic of the present invention, in addition to the first characteristic, there is proposed a bypass intake control system wherein the bypass valve is formed from the valve housing having the cylindrical valve hole and the valve piston slidably fitted in the valve hole and forming a valve chamber, the valve housing including the inlet port providing communication between the valve chamber and an upstream side of the bypass and the outlet port opening onto an inner peripheral surface of the valve hole and communicating with a downstream side of the bypass, the valve piston including a cavity opening onto an end surface thereof that faces the valve chamber and a control opening running through a peripheral wall of the cavity towards the outlet port, the control opening having an aperture size smaller than that of the outlet port that faces the valve hole and controlling the bypass intake by working in cooperation with an edge of the aperture of the outlet port that faces the valve hole.

In accordance with the fourth characteristic, since the flow control opening is completely concealed from the outlet port when the valve piston is fully closed, even if backfiring occurs when the engine is producing output while the valve piston is fully closed, the flow control opening would not be exposed to the backfire gas and it is possible to prevent contaminants such as carbon from becoming attached to the flow control opening. Moreover, since the maximum aperture size of the flow control opening that faces the outlet port is set to be smaller than the aperture size of the outlet port that faces the inner periphery of the valve hole, even if contaminants such as carbon become attached to the inner periphery of the outlet port, the attached material exerts almost no influence on the functioning of the flow control opening. The flow control opening can therefore always control the bypass intake with high precision through the entire stroke from the fully closed state to the fully open state of the valve piston. Furthermore, the flow control opening can easily be made in various forms by machining the valve piston and the characteristic of the control of the bypass flow can thus be set freely.

Furthermore, in accordance with a fifth characteristic of the present invention, in addition to the fourth characteristic, there is proposed a bypass intake control system wherein the control opening is made in the form of a notch opening onto the inner end surface of the valve piston.

In accordance with the fifth characteristic, the flow control opening can be formed in the valve piston very easily by, for example, moulding or cutting.

Furthermore, in accordance with a sixth characteristic of the present invention, in addition to the fourth or fifth characteristic, there is proposed a bypass intake control system wherein the control opening is formed to have a width in the circumferential direction of the valve piston increased towards the end surface of the valve piston on the valve chamber side.

In accordance with the sixth characteristic, fine control of the bypass intake can be easily carried out by moving the valve piston up and down in the region where there is a low degree of opening of the valve piston, and the normal idling rotational rate of the engine can be finely controlled. In the region where there is high degree of opening of the valve piston, a comparatively small stroke for the valve piston can give a comparatively large bypass intake corresponding to engine starting or fast idling, so improving the engine start properties and easily controlling the fast idling rotational rate rapidly. Moreover, since it is sufficient for the valve piston to have a small stroke, the bypass valve intake control system can be made compact.

Furthermore, in accordance with a seventh characteristic of the present invention, in addition to the sixth characteristic, there is proposed a bypass intake control system wherein the control opening is formed so that the width rapidly increases towards the end surface of the valve piston on the valve chamber side after the middle point of the control opening.

In accordance with the seventh characteristic, a smaller stroke for opening the valve piston can give a comparatively large bypass intake corresponding to the engine starting or fast idling, and the bypass intake control system can be made yet more compact.

The above-mentioned objects, other objects, characteristics and advantages of the present invention will become apparent from explanations of preferable embodiments that will be described in detail below by reference to the attached drawings.

### BRIEF DESCRIPTION OF THE DRAWINGS

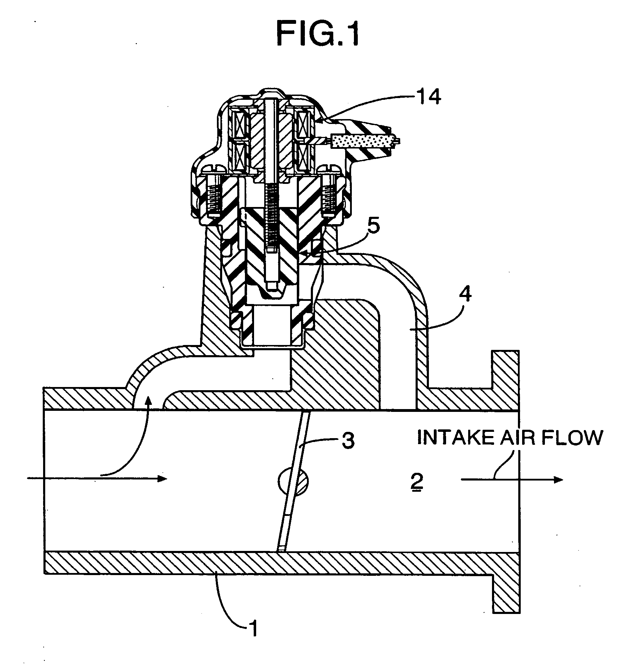

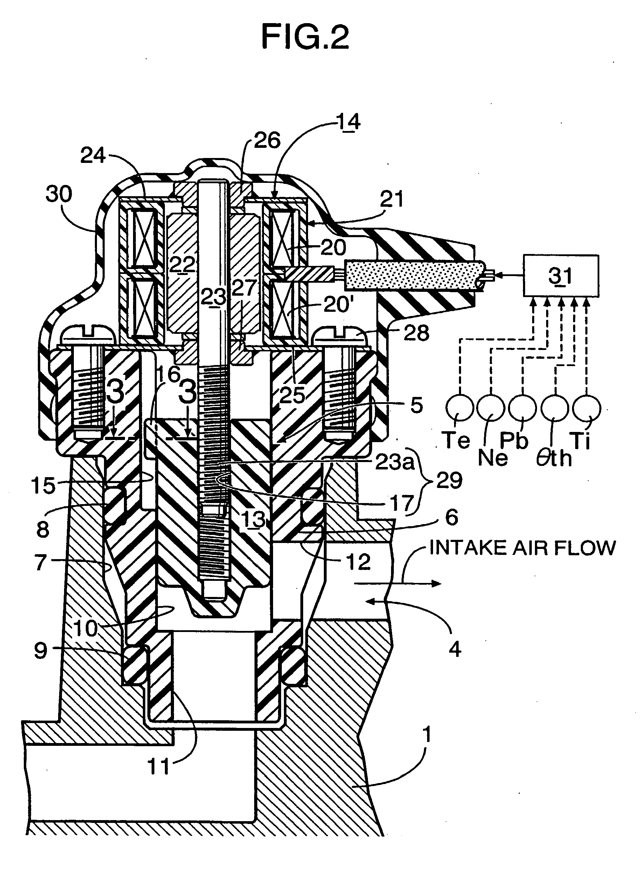

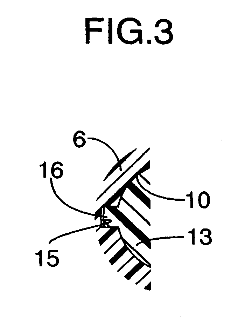

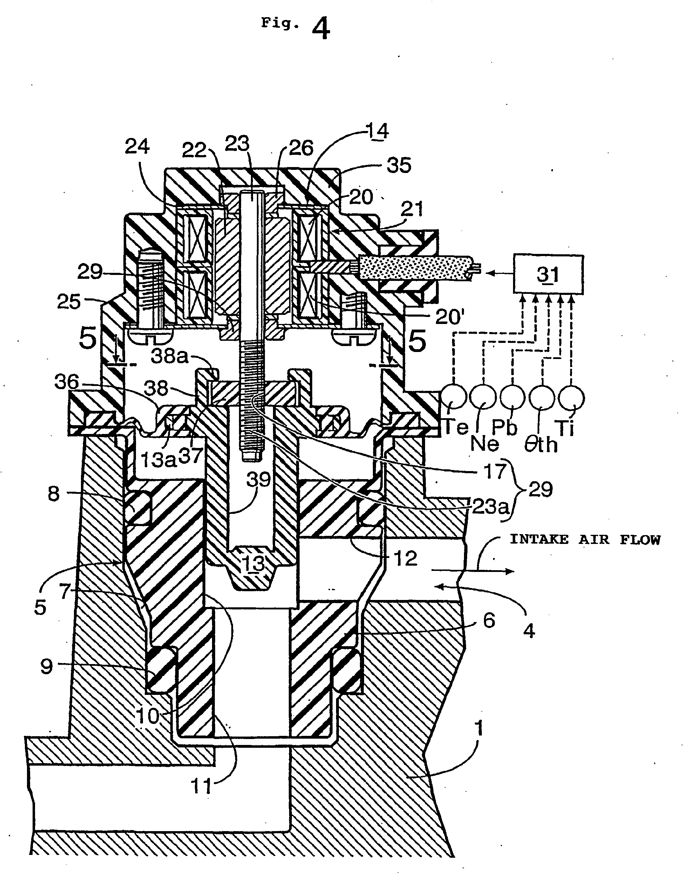

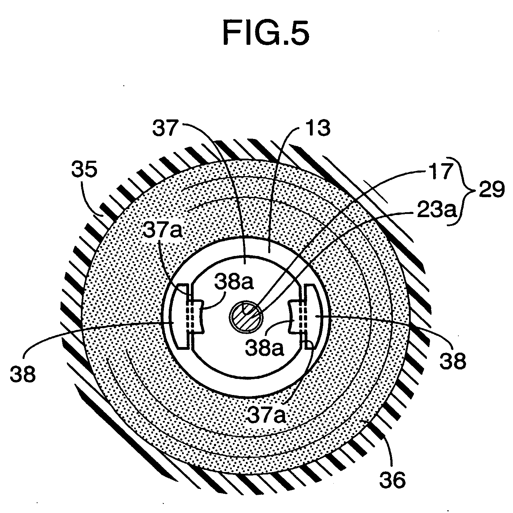

Fig. 1 is a longitudinal sectional side view of a throttle body for an engine having a bypass intake control system related to a first embodiment of the present invention; Fig. 2 is an enlarged longitudinal sectional side view of the bypass intake control system; Fig. 3 is a cross-sectional view taken along a line 3-3 in Fig. 2; Fig. 4 is a longitudinal sectional side view of a bypass intake control system related to a second embodiment of the present invention corresponding to Fig. 2; and Fig. 5 is a cross-sectional view taken along a line 5-5 in Fig. 4.

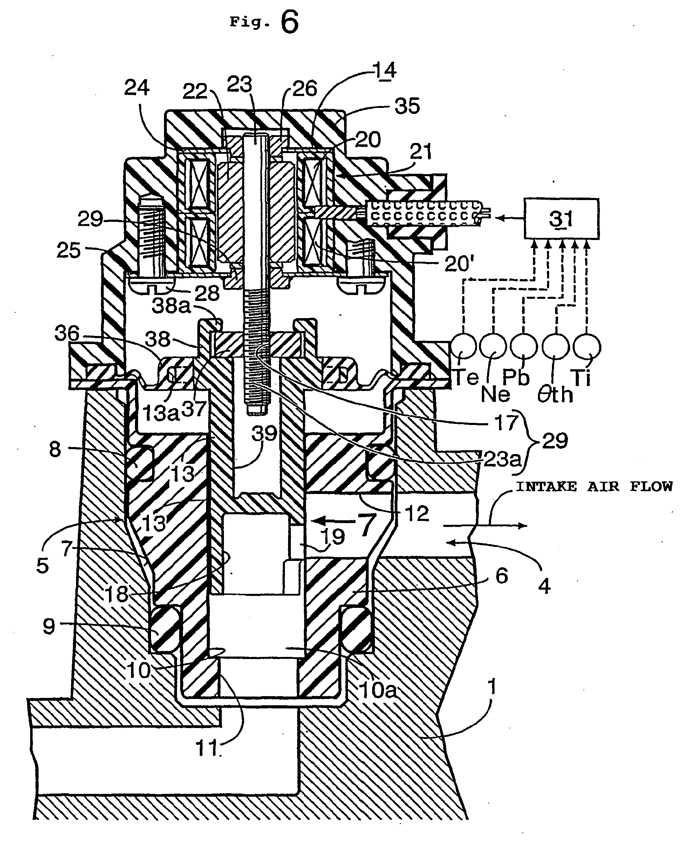

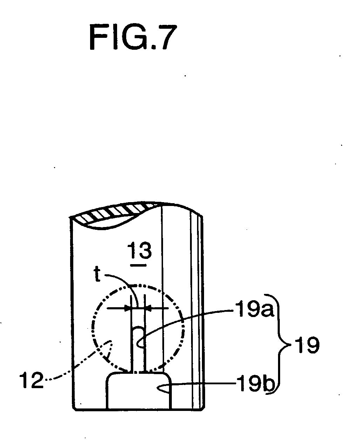

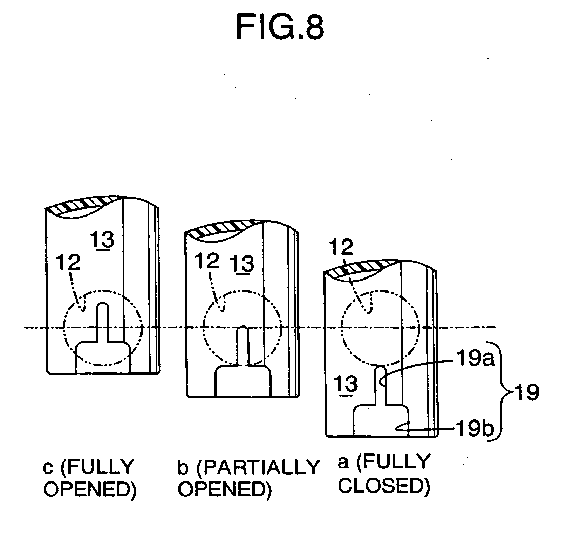

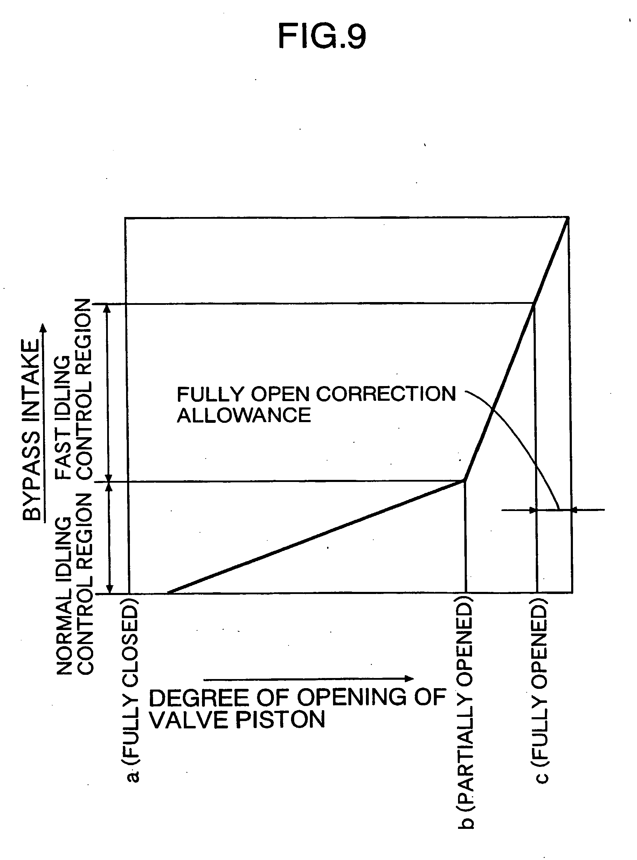

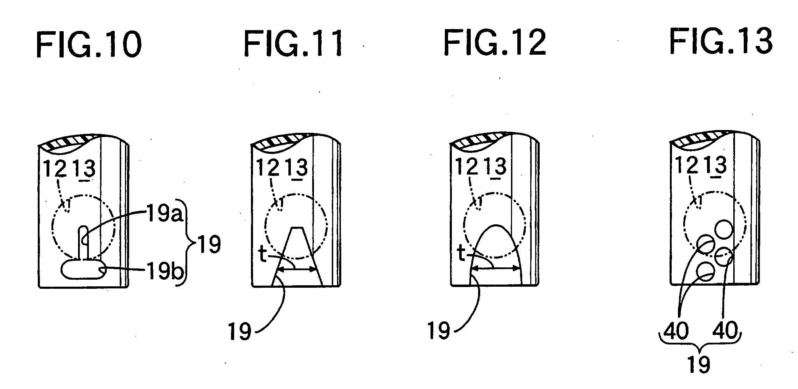

Fig. 6 is a longitudinal sectional side view of a bypass intake control system related to a third embodiment of the present invention; Fig. 7 is a front view of a valve piston in the bypass intake control system (view taken in the direction of arrow 7 in Fig. 6); Fig. 8 is a diagram for explaining the operation of the valve piston from its fully closed state to fully open state; Fig. 9 is a graph showing the relationship between the stroke of the valve piston and the bypass intake; and Figs. 10 to 13 are front views of valve pistons of fourth to seventh embodiments of the present invention.

### BEST MODE FOR CARRYING OUT THE INVENTION

Embodiments of the present invention are explained below by reference to the attached drawings.

Firstly, the first embodiment of the present invention shown in Figs. 1 to 3 is explained. In Fig. 1, a throttle body 1 has an intake passage 2 running through the centre of the throttle body 1 and communicating with an intake port of an engine. A throttle valve 3 that opens and closes the central section of the intake passage 2 is pivotally supported in the throttle body 1. A bypass 4 that bypasses the throttle valve 3 and communicates with the intake passage 2 is formed in the throttle body 1. A bypass valve 5 is provided en route through the bypass 4 to open and close the bypass 4.

As shown in Fig. 2, a valve housing 6 of the bypass valve 5 is fitted in a mounting hole 7 of the throttle body 1 via sealing members 8 and 9 so as to be present in a middle section of the bypass 4, and is fixed to the throttle body 1 by a bolt (not illustrated). The valve housing 6 is made of a synthetic resin in the form of a cylinder and has a bottomed valve hole 10 on its central axis, an inlet port 11 opening onto its base and an outlet port 12 in a side wall. The inlet port 11 and the outlet port 12 are connected to the upstream side and the downstream side of the bypass 4 respectively.

A valve piston 13 is slidably fitted in the valve hole 10 so as to open and close the outlet port 12. A stepping motor 14 that operates this valve piston 13 for opening and closing is mounted on the valve housing 6. The valve piston 13 is also made of a synthetic resin.

A positioning groove 15 and projection 16 (Fig. 3) that engage with each other in an axially slidable manner on the side opposite to the outlet port 12 are formed on the facing circumferences of the valve hole 10 and the valve piston 13. This engagement prevents the valve piston 13 from rotating. The valve piston 13 has a bottomed screw hole 17 opening onto the top thereof.

The stepping motor 14 is formed from a stator 21, which has a pair of upper and lower coils 20 and 20', and a rotor 22 comprising a permanent magnet which is surrounded by the stator 21. An output shaft 23 secured to the rotor 22 so as to project upwards and downwards is rotatably supported by bearings 26 and 27 of bracket plates 24 and 25 fixed to the upper and lower ends of the stator 21. The lower bracket plate 25 has a larger diameter than that of the stator 21. An outer periphery of the lower bracket plate 25 is fixed to the top of the valve housing 6 by bolts 28.

The output shaft 23 has a threaded shaft section 23a projecting downwards out of the lower bearing 27. The threaded shaft section 23a is screwed into the screw hole 17 of the valve piston 13. The screw hole 17 and the threaded shaft section 23a form a screw mechanism 29. This screw mechanism 29 is provided on the side opposite to the bypass 4 relative to the sliding surfaces of the valve piston 13 and the valve hole 10.

The above-mentioned stepping motor 14 is covered with a rubber boot 30. The boot 30 is inlaid in an outer periphery of the valve housing 6.

An electronic control unit 31 for controlling the application of electricity to the coils 20 and 20' is connected to the stator 21. Data regarding engine temperature Te, engine rotational rate Ne, degree of opening of the throttle valve θth, negative boost pressure Pb, intake air temperature Ti and the like are input to the above-mentioned unit 31.

The operation of the first embodiment is now explained.

The electronic control unit 31 calculates the amount of electricity that is to be applied to the stator 21 in order to obtain an optimum degree of opening of the valve piston 13 corresponding to an operational state of the engine such as starting, fast idling, normal idling or engine braking based on the data regarding the engine temperature Te, the engine rotational rate Ne, the degree of opening of the throttle valve θth, the negative boost pressure Pb, the intake air temperature Ti and the like, input as described above, and applies electricity to the stator 21 based on the calculated result so rotating the rotor 22 normally or in reverse. When the rotor 22 rotates, the threaded shaft section 23a of the output shaft 23 rotates relative to the screw hole 17. Since the valve piston 13 having the screw hole 17 cannot rotate, the valve piston 13 moves up and down along its axis accompanying the rotation of the threaded shaft section 23a and the effective size of the aperture of the outlet port 12 can thereby be adjusted. That is to say, the amount of air taken into the engine so as to bypasses the throttle valve 3 through the bypass 4 when the valve 3 is fully closed at idle can thus be controlled appropriately according to the operational state of the engine.

It should be noted here that the engine negative boost pressure in the bypass 4 is high on the downstream side and low on the upstream side relative to the outlet port 12, which is narrowed down by the valve piston 13. The negative boost pressure applied to the end surface of the valve piston 13 inside the valve hole 10, which is located on the upstream side, is therefore comparatively low. Since the thrust (resistance) applied to the valve piston 13 by the negative boost pressure is also comparatively small, the valve piston 13 can be moved vertically by a comparatively small output torque from the stepping motor 14. This, together with the effect obtained by arranging the threaded shaft section 23a of the output shaft 23 outside the rotor 22, makes it possible to greatly reduce the size of the motor 14.

Since the valve piston 13 is pressed against the inside of the valve hole 10 around the outlet port 12 due to the difference in negative pressure between the valve hole 10 and the outlet port 12, it is possible to effectively suppress air leakage through the periphery of the outlet port 12 from the valve hole 10 and enhance the precision with which the amount of air can be controlled by the valve piston 13.

Since the screw hole 17 of the valve piston 13 that the threaded shaft section 23a is screwed into is provided on the side opposite to the bypass 4 relative to the sliding surfaces of the valve piston 13 and the valve hole 10 and has a base, the screw hole 17 and the threaded shaft section 23a are shielded by the sliding surfaces of the valve piston 13 and the valve hole 10 and not exposed to gas generated when the engine backfires. It is therefore possible to prevent contaminants such as carbon from becoming attached to the screw hole 17 and the threaded shaft section 23a thus ensuring smooth operation of the screw mechanism 29.

Next, the second embodiment of the present invention is explained by reference to Figs. 4 and 5.

A motor cover 35 made of a synthetic resin is joined to the top of the valve housing 6. The motor cover 35 covers as well as supports the stepping motor 14. When joining the cover 35, an outer periphery of a diaphragm 36 that is mould-bonded to a flange 13a formed on the top of the valve piston 13 is securely clamped between the valve housing 6 and the motor cover 35.

A plate-formed intermediate member 37 having a screw hole 17 running through the centre thereof is connected to the top of the valve piston 13 so that it can move slightly in the radial direction. That is to say, the intermediate member 37 has a pair of parallel flat surfaces 37a, 37a on opposite sides thereof. A pair of connecting claws 38, 38 facing the flat surfaces 37a, 37a across a small gap are formed integrally with the valve piston 13. Each of the connecting claws 38, 38 has a bent end 38a that bends towards the top of the intermediate member 37 to retain the intermediate member 37. The threaded shaft section 23a of the output shaft 23 of the rotor 22 is screwed into and runs through the screw hole 17 of the intermediate member 37, and a portion of the threaded shaft section 23a that projects below the intermediate member 37 is received by a bottomed cylindrical cavity 39 formed in the valve piston 13.

The rest of the arrangement is the same as in the first embodiment, and components or portions in Figs.4 and 5 corresponding to those in the first embodiment are denoted by like reference numerals and characters and are therefore not explained here.

In accordance with the second embodiment, the diaphragm 36, which is securely interposed between the valve housing 6 and the motor cover 35, prevents the valve piston 13 from rotating and the valve piston 13 prevents the intermediate member 37 from rotating since the connecting claws 38, 38 come into contact with the flat surfaces 37a, 37a of the intermediate member 37. When the rotor 22 rotates, the threaded shaft section 23a rotates and the intermediate member 37 then moves in the axial direction so moving the valve piston 13 up and down via the connecting claws 38, 38. Moreover, since the intermediate member 37 can move slightly in the radial direction relative to the valve piston 13, this slight movement can absorb a displacement between the centre of the output shaft 23 and that of the valve piston 13, thus increasing the allowance for manufacturing error, which is advantageous from a manufacturing point of view.

The screw hole 17, the threaded shaft section 23a and the stepping motor 14 are shielded from the bypass 4 by the diaphragm 36, and even when the gas or moisture generated when the engine backfires passes between the sliding surfaces of the valve piston 13 and the valve hole 10, the diaphragm 36 can reliably prevent the gas or moisture from entering the screw hole 17, the threaded shaft section 23a and the stepping motor 14.

Next, the third embodiment of the present invention is explained by reference to Figs. 6 to 9.

A valve housing 6 of a bypass valve 5 is fitted in a mounting hole 7 of a throttle body 1 via sealing members 8 and 9 so as to intervene in the middle section of the bypass 4 and is fixed to the throttle body 1 by a bolt (not illustrated). The valve housing 6 is made of a synthetic resin in the form of a cylinder and has a bottomed valve hole 10 on its central axis, an inlet port 11 opening onto the bottom of the valve hole 10 and an outlet port 12 opening onto an inner periphery of the valve hole 10. The inlet port 11 and the outlet port 12 are connected to the upstream side and the downstream side of the bypass 4, respectively. The above-mentioned arrangement is the same as that in the second embodiment.

In the valve hole 10 of this third embodiment, a valve chamber 10a, which always communicates with the inlet port 11, is formed between the inner end surface of the valve piston 13, that is to say, the lower end surface of the valve piston 13 and the bottom of the valve hole 10. A cavity 18 is formed on the inner end surface of the valve piston 13 facing the valve chamber 10a, that is to say, the lower end surface of the valve piston 13. A flow control opening 19 is provided in a peripheral wall of the cavity 18 to run through the wall towards the outlet port 12. The flow control opening 19 is notched so as to open onto the inner end surface side of the valve piston 13 and comprises a small flow control section 19a having a small width t in the circumferential direction of the valve piston 13 and a large flow control section 19b, which has a large width t and is connected to the lower end of the small flow control section 19a. On the other hand, the outlet port 12 has a circular aperture on the inner periphery of the valve hole 10.

The flow control opening 19 controls the bypass intake by working in cooperation with an edge of the aperture of the outlet port 12 that faces the valve hole 10. The maximum aperture size of the flow control opening 19 that faces the outlet port 12 is set to be smaller than the aperture size of the outlet port 12 that faces the valve hole 10. The maximum aperture size of the flow control opening 19 is the aperture size relative to the outlet port 12 when the valve piston 13 is at a substantially fully open position (see 'c' in Fig. 8) that is determined by the rotational angle of the stepping motor 14.

In addition, the valve piston 13 has a fully open correction allowance (see Fig. 9). The fully open position of the valve piston 13 is corrected in the event that a contaminant becomes attached to the flow control opening 19 so decreasing the effective aperture size, and the decrease in effective aperture size can thereby be compensated for.

The rest of the arrangement is the same as in the second embodiment shown in Fig. 4, and components or portions in Figs. 6 to 8 corresponding to those in the second embodiment are denoted by like reference numerals and characters and are therefore not explained here.

Figs. 8 and 9 show the relationship between the degree of opening of the valve piston 13 and the aperture size of the flow control opening 19 in the outlet port 12 (that is to say, the bypass intake) in the third embodiment. As is clear from these drawings, the change in bypass intake relative to the vertical movement of the valve piston 13 is comparatively small in the region between 'a' and 'b' with a low degree of opening of the valve piston 13, in which only the small flow control section 19a of the flow control opening 19 faces the outlet port 12. However, the bypass intake rapidly changes in the region between 'b' and 'c' with a high degree of opening, in which a large flow control section 19b faces the outlet port 12.

In the region between 'a' and 'b' with a low degree of opening of the valve piston 13, the bypass intake can be finely adjusted by vertical movement of the valve piston 13. The normal idling rotational rate of the engine can thus be finely controlled.

When the valve piston 13 enters the region between 'b' and 'c' with a high degree of opening, since the bypass intake rapidly increases, a comparatively small stroke for the valve piston 13 can give a comparatively large bypass intake corresponding to engine starting or fast idling. The engine starting properties can thus be improved and the fast idling rotational rate can be controlled rapidly. Moreover, since it is sufficient for the valve piston 13 to have a small stroke, the bypass valve 5 and the stepping motor 14 can be made compact.

When the throttle valve 3 opens, the electronic control unit 31 receives the information and operates the stepping motor 14 so as to fully close the valve piston 13 (the fully closed state 'a'). The engine is then in a state where it is producing output, in which the engine takes in a large flow of air that is controlled by the degree of opening of the throttle valve 3.

Since the flow control opening 19 is beneath the outlet port 12 and is completely concealed when the valve piston 13 is in the fully closed state 'a', even when backfiring occurs when the engine is producing output so exposing the inner periphery of the outlet port 12 to the backfire gas, the flow control opening 19 is not exposed to the gas and it is possible to prevent contaminants such as carbon from becoming attached to the flow control opening 19. Moreover, since the maximum aperture size of the flow control opening 19 that faces the outlet port 12 is set to be smaller than the aperture size of the outlet port 12 that faces the inner periphery of the valve hole 10, even if contaminants such as carbon become attached to the inner periphery of the outlet port 12, the attached material exerts almost no influence on the functioning of the flow control opening 19.

The flow control opening 19 can thus always control the bypass intake with high precision throughout the entire stroke from the fully closed state 'a' to the fully open state 'c' of the valve piston 13.

Furthermore, since the flow control opening 19 is provided as a notch in the peripheral wall of the cavity 18 on the lower end surface of the valve piston 13, it can be formed very easily by moulding, cutting of the valve piston 13, or the like.

The screw mechanism 29 and the stepping motor 14 are shielded from the bypass 4 by the diaphragm 36, and even if gas or moisture generated when the engine backfires passes the sliding area between the valve piston 13 and the valve hole 10, it is possible to reliably prevent the gas or moisture from entering the screw mechanism 29 and the stepping motor 14, thus ensuring the durability thereof.

Since the intermediate member 37 can move slightly in the radial direction relative to the valve piston 13, this slight movement can absorb a displacement between the centre of the output shaft 23 and that of the valve piston 13, the allowance for manufacturing errors increases and it is advantageous from a manufacturing point of view.

Finally, the fourth to seventh embodiments of the present invention are explained by reference to Figs. 10 to 13.

In the fourth embodiment shown in Fig. 10, a flow control opening 19 provided in a peripheral wall of a cavity 18 at a lower end of a valve piston 13 has a modified form in which the open lower end surface of the notch-form flow control opening 19 in the third embodiment is closed. The rest of the arrangement is the same as in the above-mentioned embodiments, and components or portions corresponding to those in the above-mentioned embodiments are denoted by like reference numerals and characters and are therefore not explained here.

In accordance with the fourth embodiment, since the valve piston 13 does not have a notch in its base, there is an advantage in terms of strength.

In the fifth embodiment shown in Fig. 11, a flow control opening 19 of a valve piston 13 is formed from a trapezoidal notch having a width t that increases linearly towards a lower end surface of the valve piston 13.

In the sixth embodiment shown in Fig. 12, a flow control opening 19 of a valve piston 13 is formed from a semielliptical notch having a major axis that runs along the axis of the valve piston 13.

In the seventh embodiment shown in Fig. 13, a flow control opening 19 of a valve piston 13 is formed by arranging a plurality of round holes 40, 40 in a staggered manner.

In Figs. 11 to 13, components or portions corresponding to those in the third embodiment are denoted by like reference numerals and characters and are therefore not explained here.

As is clear from the third to seventh embodiments, the flow control openings 19 can easily be made in various forms by machining the valve pistons 13. The characteristic of the control of the bypass flow can be set freely according to the engine specification or performance.

The present invention is not limited by the above-mentioned embodiments and can be modified in a variety of ways without departing from the spirit and scope of the claims. For example, the valve housing 6 can be formed integrally with the throttle body 1. The stepping motor 14 can be replaced with an actuator of, for example, a wax type or a solenoid type. It is also possible to provide a sliding key between the valve piston 13 and the valve housing 6 in order to stop rotation of the valve piston 13 with high precision.

## Claims

1. A bypass intake control system comprising an intake passage (2) of a throttle body (1) which is connected to a bypass (4) that bypasses a throttle valve (3) for opening and closing the intake passage (2), a bypass valve (5) which is provided in the bypass (4) for opening and closing the bypass (4), and a stepping motor (14) which is connected to the bypass valve (5) and operates the bypass valve (5) to open and close the bypass valve via a screw mechanism (29),
**characterized in that** the bypass valve (5) is formed from a valve housing (6) having a valve hole (10), an inlet port (11) opening on one side of the valve hole (10) and leading to the upstream side of the bypass (4) and an outlet port (12) opening on the other side of the valve hole (10) and leading to the downstream side of the bypass (4), and a valve piston (13) fitted in the valve hole (10) in a slidable and non-rotatable manner so as to open and close communication between the inlet port (11) and the outlet port (12), a screw hole (17) is formed in the valve piston (13) or an intermediate member (37) connected to the valve piston (13) on the side opposite to the bypass (4) relative to sliding surfaces of the valve housing (6) and the valve piston (13), and a threaded shaft section (23a) of an output shaft (23) projecting out of an end surface of a rotor (22) of the stepping motor (14) is screwed into the screw hole (17) to form the screw mechanism (29).

2. A bypass intake control system according to Claim 1, wherein the outlet port (12) opens onto an inside surface of the valve hole (10) and is opened and closed by an outer peripheral surface of the valve piston (13).

3. A bypass intake control system according to Claim 1 or 2, wherein a diaphragm (36) is provided between the valve housing (6) and the valve piston (13) to block communication between the valve hole (10) and the stepping motor (14).

4. A bypass intake control system according to Claim 1 wherein the bypass valve (5) is formed from the valve housing (6) having the cylindrical valve hole (10) and the valve piston (13) slidably fitted in the valve hole (10) and forming a valve chamber (10a), the valve housing (6) including the inlet port (11) providing communication between the valve chamber (10a) and an upstream side of the bypass (4) and the outlet port (12) opening onto an inner peripheral surface of the valve hole (10) and communicating with a downstream side of the bypass (4), the valve piston (13) including a cavity (18) opening onto an end surface that faces the valve chamber (10a) and a control opening (19) running through a peripheral wall of the cavity (18) towards the outlet port (12), the control opening having an aperture size smaller than that of the outlet port (12) that faces the valve hole (10) and controlling the bypass intake by working in cooperation with an edge of the aperture of the outlet port (12) that faces the valve hole (10).

5. A bypass intake control system according to Claim 4, wherein the control opening (19) is made in the form of a notch opening onto the inner end surface of the valve piston (13).

6. A bypass intake control system according to Claim 4 or 5, wherein the control opening (19) is formed to have a width (t) in the circumferential direction of the valve piston (13) increased towards the end surface of the valve piston (13) on the valve chamber (10a) side.

7. A bypass intake control system according to Claim 6 wherein the control opening (19) is formed so that the width (t) rapidly increases towards the end surface of the valve piston (13) on the valve chamber (10a) side after the middle point of the control opening (19).

## Patentansprüche

1. Bypasseinlasssteuerungssystem, umfassend einen Einlasskanal (2) eines Drosselkörpers (1), der mit einem Bypass (4) verbunden ist, der ein Drosselventil (3) zum Öffnen und Schließen des Einlasskanals (2) umgeht, ein Bypassventil (5), das in dem Bypass (4) zum Öffnen und Schließen des Bypasses (4) vorgesehen ist, sowie einen Schrittmotor (14), der mit dem Bypassventil (5) verbunden ist und das Bypassventil (5) über einen Schraubmechanismus (29) zum Öffnen und Schließen des Bypassventils betätigt,
**dadurch gekennzeichnet, dass** das Bypassventil (5) gebildet ist aus einem Ventilgehäuse (6), das ein Ventilloch (10), eine Einlassöffnung (11), die sich zu einer Seite des Ventillochs (10) öffnet und zur stromaufwärtigen Seite des Bypasses (4) führt, sowie eine Auslassöffnung (12), die sich an der anderen Seite des Ventillochs (10) öffnet und zur stromabwärtigen Seite des Bypasses (4) führt, aufweist, sowie einem Ventilkolben (13), der in das Ventilloch (10) verschiebbar und nicht drehbar eingesetzt ist, um die Verbindung zwischen der Einlassöffnung (11) und der Auslassöffnung (12) zu öffnen und zu schließen, wobei ein Gewindeloch (17) in dem Ventilkolben (13) oder einem mit dem Ventilkolben (13) verbundenen Zwischenelement (37) an der Seite, die in Bezug auf Gleitoberflächen des Ventilgehäuses (6) und des Ventilkolbens (13) dem Bypass (4) gegenüberliegt, ausgebildet ist, und ein Gewindestangenabschnitt (23a) einer Ausgangswelle (23), der aus einer Endfläche eines Rotors (22) des Schrittmotors (14) vorsteht, in das Gewindeloch (17) eingeschraubt ist, um den Schraubmechanismus (29) zu bilden.

2. Bypasseinlasssteuerungssystem nach Anspruch 1, worin sich die Auslassöffnung (12) an der Innenoberfläche des Ventillochs (10) öffnet und durch eine Außenumfangsoberfläche des Ventilkolbens (13) geöffnet und geschlossen wird.

3. Bypasseinlasssteuerungssystem nach Anspruch 1 oder 2, worin eine Membrane (36) zwischen dem Ventilgehäuse (6) und dem Ventilkolben (13) vorgesehen ist, um die Verbindung zwischen dem Ventilloch (10) und dem Schrittmotor (14) zu sperren.

4. Bypasseinlasssteuerungssystem nach Anspruch 1, worin das Bypassventil (5) aus dem das zylindrische Ventilloch (10) aufweisenden Ventilgehäuse (6) und dem Ventilkolben (13), der in das Ventilloch (10) verschiebbar eingesetzt ist und eine Ventilkammer (10a) bildet, aufgebaut ist, wobei das Ventilgehäuse (6) die Einlassöffnung (11), die eine Verbindung zwischen der Ventilkammer (10a) und einer stromaufwärtigen Seite des Bypasses (4) herstellt, sowie die Auslassöffnung (12), die sich an einer Innenumfangsfläche des Ventillochs (10) öffnet und mit einer stromabwärtigen Seite des Bypasses (4) in Verbindung steht, enthält, wobei der Ventilkolben (13) einen Hohlraum (18), der sich an einer Endfläche öffnet, die zur Ventilkammer (10a) weist, sowie eine Steueröffnung (19), die durch eine Umfangswand des Hohlraums (18) hindurch zur Auslassöffnung (12) verläuft, enthält, wobei die Steueröffnung eine Öffnungsgröße hat, die kleiner ist als jene der Auslassöffnung (12), die zum Ventilloch (10) weist, und das Bypassventil steuert/regelt, indem es mit einem Öffnungsrand der Auslassöffnung (12), die zum Ventilloch (10) weist, zusammenarbeitet.

5. Bypasseinlasssteuerungssystem nach Anspruch 4, worin die Steueröffnung (19) in der Form einer Kerböffnung an der Innenendfläche des Ventilkolbens (13) hergestellt ist.

6. Bypasseinlasssteuerungssystem nach Anspruch 4 oder 5, worin die Steueröffnung (19) so ausgebildet ist, dass sie in der Umfangsrichtung des Ventilkolbens (13) eine Weite (t) hat, die zur Endfläche des Ventilkolbens (13) an der Seite der Ventilkammer (10a) hin zunimmt.

7. Bypasseinlasssteuerungssystem nach Anspruch 6, worin die Steueröffnung (19) so ausgebildet ist, dass die Weite (t) zur Endoberfläche des Ventilkolbens (13) an der Seite der Ventilkammer (10a) hin nach dem Mittelpunkt der Steueröffnung (13) rasch zunimmt.

## Revendications

1. Système de commande d'admission de dérivation comprenant un passage d'admission (2) d'un corps d'étrangleur (1) qui est raccordé à une dérivation (4) qui contourne une soupape d'étranglement (3) pour ouvrir et fermer le passage d'admission (2), une soupape de dérivation (5) qui est prévue dans la dérivation (4) pour ouvrir et fermer la dérivation (4), et un moteur pas à pas (14) qui est raccordé à la soupape de dérivation (5) et actionne la soupape de dérivation (5) pour ouvrir et fermer la soupape de dérivation via un mécanisme de vis (29),
**caractérisé en ce que** la soupape de dérivation (5) est formée à partir d'un boîtier de soupape (6) ayant un trou de soupape (10), un orifice d'entrée (11) s'ouvrant d'un côté du trou de soupape (10) et conduisant vers le côté amont de la dérivation (4) et un orifice de sortie (12) s'ouvrant de l'autre côté du trou de soupape (10) et conduisant au côté aval de la dérivation (4), et un piston de soupape (13) monté dans le trou de soupape (10) d'une manière coulissante et non rotative afin d'ouvrir et de fermer la communication entre l'orifice d'entrée (11) et l'orifice de sortie (12), un trou de vis (17) est formé dans le piston de soupape (13) ou un élément intermédiaire (37) raccordé au piston de soupape (13) sur le côté opposé à la dérivation (4) par rapport aux surfaces coulissantes du boîtier de soupape (6) et au piston de soupape (13), et une section d'arbre fileté (23a) d'un arbre de sortie (23) faisant saillie hors d'une surface d'extrémité d'un rotor (22) du moteur pas à pas (14) est vissée dans le trou de vis (17) pour former le mécanisme de vis (29).

2. Système de commande d'admission de dérivation selon la revendication 1, dans lequel l'orifice de sortie (12) s'ouvre sur une surface interne du trou de soupape (10) et est ouvert et fermé par une surface périphérique externe du piston de soupape (13).

3. Système de commande d'admission de dérivation selon la revendication 1 ou 2, dans lequel un diaphragme (36) est prévu entre le boîtier de soupape (6) et le piston de soupape (13) pour bloquer la communication entre le trou de soupape (10) et le moteur pas à pas (14).

4. Système de commande d'admission de dérivation selon la revendication 1, dans lequel la soupape de dérivation (5) est formée à partir du boîtier de soupape (6) ayant le trou de soupape (10) cylindrique et le piston de soupape (13) monté de manière coulissante dans le trou de soupape (10) et formant une chambre de soupape (10a), le boîtier de soupape (6) comprenant l'orifice d'entrée (11) fournissant la communication entre la chambre de soupape (10a) et un côté amont de la dérivation (4) et l'orifice de sortie (12) s'ouvrant sur une surface périphérique interne du trou de soupape (10) et communiquant avec un côté aval de la dérivation (4), le piston de soupape (13) comprenant une cavité (18) s'ouvrant sur une surface d'extrémité qui fait face à la chambre de soupape (10a) et une ouverture de commande (19) s'étendant à travers une paroi périphérique de la cavité (18) vers l'orifice de sortie (12), l'ouverture de commande ayant une taille d'ouverture plus petite que celle de l'orifice de sortie (12) qui fait face au trou de soupape (10) et commandant l'admission de dérivation en travaillant en coopération avec un bord de l'ouverture de l'orifice de sortie (12) qui fait face au trou de soupape (10).

5. Système de commande d'admission de dérivation selon la revendication 4, dans lequel l'ouverture de commande (19) est réalisée sous la forme d'une encoche s'ouvrant sur la surface d'extrémité interne du piston de soupape (13).

6. Système de commande d'admission de dérivation selon la revendication 4 ou 5, dans lequel l'ouverture de commande (19) est formée pour avoir une largeur (t) dans la direction circonférentielle du piston de soupape (13) augmentée vers la surface d'extrémité du piston de soupape (13) du côté de la chambre de soupape (10a).

7. Système de commande d'admission de dérivation selon la revendication 6, dans lequel l'ouverture de commande (19) est formée de sorte que la largeur (t) augmente rapidement vers la surface d'extrémité du piston de soupape (13) du côté de la chambre de soupape (10a) après le point central de l'ouverture de commande (19).
